# EUROPEAN PATENT APPLICATION

(11) **EP 4 400 622 A1**
(43) Date of publication of application: **17.07.2024**
(21) Application number: 22895421.0
(22) Date of filing: 31.10.2022
(51) Int. Cl.: C22C 38/00, C21D 8/12, C22C 38/04, C22C 38/60, H01F 1/147

(54) **NON-ORIENTED ELECTRICAL STEEL SHEET AND METHOD FOR PRODUCING SAME, AND METHOD FOR PRODUCING MOTOR CORES**

(30) Priority: 17.11.2021 JP 2021186845
(71) Applicant: JFE Steel Corporation, Tokyo 100-0011 (JP)
(72) Inventor: TAKAJYO, Shigehiro, Tokyo 100-0011 (JP); ZAIZEN, Yoshiaki, Tokyo 100-0011 (JP)
(74) Representative: Hoffmann Eitle
(86) International application number: PCT/JP2022/040677
(87) International publication number: WO 2023/090138

(57) **Abstract**

Provided is a non-oriented electrical steel sheet with not only low low-frequency iron loss but also low high-frequency iron loss by utilizing primary recrystallization, a new crystal texture control, and a new crystal grain size control. The non-oriented electrical steel sheet has the ingredient composition including, in mass%, C: 0.0050% or less, Si: 1.0% to 7.5%, Mn: 2.00% or less, P: 0.10% or less, and S: 0.0040% or less, with the rest being Fe and unavoidable impurities. The thickness of the steel sheet is 0.20 mm or less. Regarding an ODF, the maximum intensity is obtained within Φ = 0°, and the intensity of an orientation in which φ1 = 45°, φ2 = 45°, and Φ = 0° is 4.0 or more. A method for producing the non-oriented electrical steel sheet includes subjecting a steel material having a predetermined ingredient composition to hot rolling, two cold rolling with intermediate annealing between each cold rolling, and final annealing. The rolling reduction of the first cold rolling is 92% or more, and the rolling reduction of the second cold rolling is between 30% and 80%.

## Description

### Technical Field

The present invention relates to a non-oriented electrical steel sheet with excellent magnetic properties to be used as an iron core material of a motor, a method for producing the same, and a method for producing a motor core.

### Background Art

A non-oriented electrical steel sheet, which is mainly used as an iron core material of drive motors for electronic vehicles or motors for household electrical appliances, is required to have low iron loss to increase energy use efficiency and is also to have high magnetic flux density for downsizing. The magnetic properties of the steel sheet largely vary depending on the thickness and specific resistance of the steel sheet. For example, high-function materials such as high-Si electrical steel sheets have been made thinner or high-alloyed to increase the content of an element for increasing specific resistance, such as Si or Al. However, if the steel sheets are made too thin or an alloy element is added thereto, problems will arise such that a higher rolling load will be required and the steel will become brittle, resulting in significantly reduced manufacturability and increased production costs.

Under such circumstances, technologies for improving the magnetic properties of non-oriented electrical steel sheets have been continuously developed. However, many of them have been achieved by changing the texture of steel crystals or by developing technology for controlling a magnetic domain.

It is known that iron crystals with a body-centered cubic structure, when magnetized in the <100> direction, exhibit magnetization behavior useful for the above applications. A non-oriented electrical steel sheet is assumed to be used by magnetizing in a given direction within the plane of the steel sheet. Thus, it is considered ideal that the <100> direction is parallel to the plane of the sheet and that the sheet has crystal textures dispersed in all directions within the plane of the sheet.

However, the conventional method for producing a non-oriented electrical steel sheet, that is, a method of cold rolling a hot-rolled steel sheet with a thickness of 2 mm to 3 mm to a thickness of about 0.2 mm and then performing recrystallization annealing thereon, has a problem in that the {111} plane, which is unfavorable to the magnetic properties, is preferentially formed in the plane of the sheet. Since the {111} plane is formed from a region in the vicinity of crystal grain boundaries before cold rolling, technology has been established that improves the magnetic properties by annealing a hot-rolled steel sheet to reduce the frequency of crystal grain boundaries before cold rolling; however, the {111} plane is still dominantly formed.

Meanwhile, technologies have been proposed to achieve extremely high magnetic flux density by performing high-temperature annealing in a reduced-pressure atmosphere, other than the conventional production process. For example, Patent Literature 1 discloses a technology using a mechanism in which crystal grains with the {100} plane orientation and the {110} plane orientation, which have low surface energy, grow by encroaching on crystal grains with other orientations having high surface energy, in a low-pressure atmosphere. This technology does not depend on the high-alloying of Si, Al, and so on, and thus has the advantage that non-oriented electrical steel sheets with excellent magnetic properties can be produced regardless of the cost trend of the alloy raw materials.

Patent Literature 2 discloses a technology that combines high-level of steel purification and annealing in a reduced-pressure atmosphere to adjust the crystal grain size to several mm and preferentially form {100} texture.

Meanwhile, to reduce iron loss, crystal grains with the {100} plane orientation within the plane of a sheet need to be formed as a recrystallized texture after annealing. Even when {100} is formed as a non-recrystallized texture after cold rolling, the texture subjected to the processing deteriorates magnetic properties, and thus is not useful. The types of recrystallization include primary recrystallization, secondary recrystallization, and tertiary recrystallization which occur based on strain energy, grain boundary energy, and surface energy, respectively, as their driving forces. Among them, a technology for forming { 100} based on secondary recrystallization is disclosed in Patent Literature 3. Although sufficient verifications have not been made on whether tertiary recrystallization is also applicable, such a technology is disclosed in Patent Literature 2, Non Patent Literature 1, and so on.

### Citation List

### Patent Literature

Patent Literature 1: JP-2001-131642A
Patent Literature 2: JP-2017-106101A
Patent Literature 3: JP-2008-106367A

### Non Patent Literature

Non Patent Literature 1: George W. Wiener, "Metallurgy of oriented silicon steels", Journal of Applied Physics, 35.3(1964), p. 856-860.

### Summary of Invention

### Technical Problem

The inventors have thoroughly studied a method for producing a non-oriented electrical steel sheet in which the { 100} plane orientation is preferentially formed in the plane of the sheet, including verification tests of the conventional technologies.

Consequently, it was found that the technology disclosed in Patent Literature 1 is excellent in magnetic properties in the commercial frequency range, such as magnetic flux density B₅₀ and iron loss W_{15/100}, by performing annealing in a reduced-pressure atmosphere. However, the technology cannot reduce the iron loss in the high frequency range, such as iron loss W_{10/400} as expected. To examine the cause of the above phenomenon, the texture of the obtained steel sheet was observed. The result shows that the crystal grain size widely varies, such that the steel sheet contains a mixture of crystal grains with a minimum grain size of several mm and super coarse crystal grains with a maximum grain size of 40 mm, both in the rolling direction, resulting in that the average crystal grain size was coarsened to reach 20 mm or more. Since the iron loss in the high frequency range is largely influenced by the magnetic domain structure, it is considered that the increase in iron loss has resulted from the increased size of the magnetic domain due to the coarsened crystal grains.

The technology disclosed in Patent Literature 2 was found to need further improvement because the crystal grain size of the obtained steel sheet is still larger than the crystal grain size of 1 mm or less, which is considered preferable to reduce the iron loss in the high-frequency range.

Patent Literature 3 discloses a method of causing secondary recrystallization, which requires long-time batch annealing and cannot achieve high productivity. In addition, because the obtained recrystallized texture is liable to be coarsened, the method is not suitably used for high-frequency applications.

Non Patent Literature 1 and Patent Literature 2 both disclose a method of utilizing tertiary recrystallization. In order to effectively utilize surface energy, the method requires not only a high-purity steel material but also a high-level production technology such that annealing needs to be performed in a reduced-pressure atmosphere to clean the surface of the steel sheet. Further, the method of utilizing tertiary recrystallization requires an annealing time of tens of minutes or longer, which is problematic in terms of productivity.

In view of the above problems of the conventional technologies, the present invention aims to provide a non-oriented electrical steel sheet having low iron loss not only in the low-frequency range but also in the high-frequency range, an advantageous method for producing such a steel sheet, and a method for producing a motor core using such a steel sheet.

### Solution to Problem

As a result of diligent studies to solve the above problems, the present inventors have found that a non-oriented electrical steel sheet with a low iron loss not only in the low-frequency range but also in the high-frequency range can be obtained by adapting a two-step cold rolling process for cold rolling, and performing the first cold rolling at a high rolling reduction and also appropriately controlling the rolling temperature to optimize the texture of the steel sheet subjected to the final annealing. Thus, the present inventors arrived at the present invention.

The present invention based on the foregoing findings includes the following.
[1] A non-oriented electrical steel sheet having an ingredient composition including, in mass%, C: 0.0050% or less, Si: 1.0 to 4.5%, Mn: 2.00% or less, P: 0.10% or less, and S: 0.0040% or less, with the rest being Fe and unavoidable impurities, characterized in that the thickness of the steel sheet is 0.20 mm or less, and in terms of an orientation distribution function (ODF) of a central layer in a thickness direction of the steel sheet represented in an Euler space representing a crystal texture in which 0 ≤ φ 1 ≤ 90°, φ2 = 45°, and 0 ≤ Φ ≤ 90° , a maximum intensity is obtained within Φ = 0°, and an intensity of an orientation in which φ1 = 45°, φ2 = 45°, and Φ = 0° is 4.0 or more.
[2] In [1] above, the average crystal grain size in the rolling direction is preferably 0.20 mm or less.
[3] The non-oriented electrical steel sheet according to [1] or [2] above may further include, in addition to the ingredient composition, at least one element selected from the group consisting of, in mass%, Al: 0.0001 to 2.0%, N: 0.003% or less, Ca: 0.0005 to 0.010%, Cr: 0.001 to 0.05%, Cu: 0.001 to 0.5%, Sb: 0.001 to 0.05%, Sn: 0.001 to 0.05%, and B: 0.0001 to 0.005%.
[4] In any one of [1] to [3] above, the Si content may be in a range of 1.0 to 7.5%.
[5] The non-oriented electrical steel sheet according to any one of [1] to [4] may further include, in addition to the ingredient composition, at least one element selected from the group consisting of Zn, Co, Mo, Ni, and W by 0.001 to 0.1 mass% in total.
[6] The non-oriented electrical steel sheet according to any one of [1] to [5] may further include, in addition to the ingredient composition, at least one element selected from the group consisting of O, Mg, REM, Ti, Nb, V, Ta, Ge, Pb, As, and Ga by 0.001 to 0.05 mass% in total.
[7] Provided is a method for producing a non-oriented electrical steel sheet, including hot rolling a steel material having an ingredient composition including, in mass%, C: 0.0050% or less, Si: 1.0 to 4.5%, Mn: 2.00% or less, P: 0.10% or less, and S: 0.0040% or less, and optionally, including at least one element selected from the group consisting of Al: 0.0001 to 2.0%, N: 0.003% or less, Ca: 0.0005 to 0.010%, Cr: 0.001 to 0.05%, Cu: 0.001 to 0.5%, Sb: 0.001 to 0.05%, Sn: 0.001 to 0.05%, and B: 0.0001 to 0.005%, with the rest being Fe and unavoidable impurities; performing two cold rollings with intermediate annealing between each cold rolling; and performing final annealing, characterized in that the rolling reduction of the first cold rolling is 92% or more, and the rolling reduction of the second cold rolling is between 30% and 80%.
[8] The method of [7] may further include performing hot-band annealing between the hot rolling and the first cold rolling.
[9] In the cold rolling of the method [7] or [8], the rolling temperature of the first cold rolling may be 150 to 300°C, and the rolling temperature of the second cold rolling may be 50 to 150°C.
[10] The method of any one of [7] to [9] may further include performing siliconizing treatment after the cold rolling to allow the steel sheet to contain a maximum of 7.5% Si on average throughout the thickness of the steel sheet.
[11] Provided is a method for producing a motor core, including producing a motor core composed of a rotor core and a stator core from the non-oriented electrical steel sheet produced with the method of any one of [7] to [9]; and subjecting the stator core to stress-relief annealing.

### Advantageous Effects of Invention

The present invention can produce a non-oriented electrical steel sheet with a high magnetic flux density and low iron loss not only in the low-frequency range but also in the high-frequency range without requiring a high-level production facility. Thus, the present invention can be suitably used in the production of compact, high-efficiency motors, and is thus industrially advantageous.

### Description of Embodiments

The inventors have conducted the following studies by focusing on cold rolling, among the production steps for a non-oriented electrical steel sheet including hot rolling, cold rolling, and annealing. Specifically, although many studies have been made so far on cold rolling to optimize production conditions, the present inventors have attempted to produce a non-oriented electrical steel sheet under a new condition that has not been studied so far, and have investigated the influence of the condition on the magnetic properties.

A steel ingot was prepared with a thickness of 100 mm and an ingredient composition including, in mass%, C: 0.001%, Si: 3.0%, Mn: 0.4%, P: 0.02%, and S: 0.0018%, with the rest being Fe and unavoidable impurities. The steel ingot was then heated to 1020°C, and was subjected to hot rolling to a finishing temperature of 800°C to obtain a hot-rolled sheet with a thickness of 5 mm, followed by hot-band annealing at 950°C for 30 seconds. The steel sheet after the hot-band annealing was then cold rolled to obtain cold-rolled sheets with thicknesses of 1.8 mm, 0.5 mm, 0.2 mm, 0.1 mm, and 0.08 mm, from each of which a test specimen measuring 30 mm in width and 280 mm in length was cut out. Specifically, a total of four test specimens were obtained, including two with the longitudinal direction in the rolling direction and the other two with the longitudinal direction in a direction perpendicular to the rolling direction. The test specimens were annealed at 800°C for 15 seconds in an Ar atmosphere, and the mean value of the magnetic flux density B₅₀ for the rolling direction and the direction perpendicular to the rolling direction was determined by an Epstein test.

The test specimens after the magnetic measurement were used to measure the texture of the central layer in the thickness direction of the sheets by X-ray diffractometry. Specifically, an incomplete pole figure of {200}, {110}, and {211} was experimentally determined, and an orientation distribution function (ODF) was calculated from the incomplete pole figure using the ADC method. Then, the ODF was examined in detail for a region of 0 ≤ φ1 ≤90°, φ2 = 45°, and 0 ≤ Φ ≤ 90° where the representative texture of BCC iron frequently appears. Note that in the above region, the region where Φ = 0° corresponds to the existence frequency of a crystal orientation advantageous to magnetic properties where the { 100} plane appeared in parallel with the rolled plane, and further, Φ1 = 45° corresponds to {100}<001> called "cube orientation." Further, the region where Φ = 55° corresponds to a crystal orientation disadvantageous to the magnetic properties where the {111} plane, appeared in parallel with the rolled plane.

Table 1 shows the measurement results. The magnetic flux density decreased as the rolling reduction of the cold rolling increased up to the intermediate thickness (i.e., thickness obtained after the first cold rolling step) of 0.10 mm. This is considered because {111} that has adverse effects on the magnetic properties had increased. However, when the rolling reduction of the cold rolling was further increased to obtain a finishing thickness as thin as 0.08 mm, as the maximum ODF within Φ = 55° in Condition 5 was reduced compared with that of Conditions 4, which indicates that the intensity of {111} decreased, which means that the magnetic properties improved. Herein, the phrase "the maximum ODF within Φ = 55°" means the maximum intensity of a cross section of Φ2 = 45° at Φ = 55°.

Next, the magnetic properties of each cold-band annealed sheet shown in Table 1 were examined when the second cold rolling and annealing were conducted on each sheet as the starting material. Note that the annealing after the second cold rolling was performed under the conditions of 820°C for 30 seconds in an Ar atmosphere. Table 2 shows the conditions of the second cold rolling and the evaluation results of the magnetic properties. In each steel sheet obtained by using, as the base material (i.e., starting material), cold-band annealed sheets of Conditions 3 to 6 (in which the rolling reduction of the first cold rolling step was 92% or more) in Table 1 and performing the second cold rolling under Conditions 9 to 11 and 14 (in which the rolling reduction of the second cold rolling was 50 or 63%) in Table 2 and annealing, Φ at which the ODF has the maximum value is 0°. This indicates that Cube orientation, which is favorable for improving the magnetic flux density, was generated at a high frequency of 4.0 or more.

Conventionally, heavy-reduction rolling which is performed at a rolling reduction of more than 90% and can sufficiently reduce the finishing thickness has tended to be applicable only to a single-step cold rolling process that involves one cold rolling to obtain the final product thickness. Meanwhile, in a two-step cold rolling process involving two cold rollings to obtain the product thickness, it has been considered natural to set the rolling reduction of the first cold rolling at a low level to suppress the formation of an orientation that is unfavorable in terms of magnetic properties.

However, the inventors have found from the results of the above experiment that it is possible to obtain a texture with such unconventional magnetic properties that, in particular, can advantageously reduce the high-frequency iron loss, by adopting a new process of performing the first cold rolling at high rolling reduction, and then performing the second cold rolling at low rolling reduction to obtain the final product thickness.

**Table 1**

| Condition | First cold rolling | | Magnetic flux density B₅₀ (T) | Φ (°) at which ODF is maximum | ODF at Cube | Maximum ODF at Φ=55° |
|---|---|---|---|---|---|---|
| | Rolling reduction (%) | Intermediate thickness (mm) | | | | |
| 1 | 64.0 | 1.80 | 1.738 | 35 | 2.1 | 1.9 |
| 2 | 90.0 | 0.50 | 1.585 | 20 | 0.8 | 3.8 |
| 3 | 92.0 | 0.40 | 1.592 | 20 | 0.6 | 3.2 |
| 4 | 96.0 | 0.20 | 1.583 | 20 | 0.6 | 3.3 |
| 5 | 98.0 | 0.10 | 1.511 | 20 | 1.0 | 6.3 |
| 6 | 98.4 | 0.08 | 1.567 | 15 | 0.8 | 5.2 |
| Before rolling | 0 | 5.00 | - | 0 | 1.5 | 8.3 |

**Table 2**

| Condition | Material Used for Test | Second cold rolling | | Magnetic flux density B₅₀ (T) | Φ (°) at which ODF is maximum | ODF at Cube | Maximum ODF at Φ=55° |
|---|---|---|---|---|---|---|---|
| | | Rolling reduction (%) | Final thickness (mm) | | | | |
| 7 | Cold-band annealed sheet of Table 1-1 | 61 | 0.70 | 1.694 | 90 | 1.4 | 2.8 |
| 8 | Cold-band annealed sheet of Table 1-2 | 60 | 0.20 | 1.628 | 55 | 2.5 | 4.7 |
| 9 | Cold-band annealed sheet of Table 1-3 | 63 | 0.15 | 1.704 | 0 | 5.1 | 3.9 |
| 10 | Cold-band annealed sheet of Table 1-4 | 50 | 0.10 | 1.695 | 0 | 4.1 | 4.1 |
| 11 | Cold-band annealed sheet of Table 1-5 | 50 | 0.05 | 1.757 | 0 | 7.3 | 2.8 |
| 12 | Cold-band annealed sheet of Table 1-5 | 25 | 0.075 | 1.595 | 55 | 3.1 | 1.9 |
| 13 | Cold-band annealed sheet of Table 1-5 | 85 | 0.015 | 1.512 | 55 | 2.8 | 1.8 |
| 14 | Cold-band annealed sheet of Table 1-6 | 50 | 0.04 | 1.688 | 0 | 5.2 | 3.5 |

In the following description of the chemical ingredients of a steel material used for producing the non-oriented electrical steel sheet of the present invention, "%" of each steel ingredient to be described below means "mass%."

### C: 0.0050% or less

A high C content in the product sheet causes magnetic aging, resulting in the deterioration of magnetic properties. Therefore, the upper limit of the C content in the steel material is set at 0.0050% or less. Preferably, the upper limit is 0.0030% or less.

### Si: 1.0 to 4.5%

Si is an element that increases specific resistance and is effective in reducing eddy current loss. Therefore, Si is added at 1.0% or more. Meanwhile, the excessive addition of Si causes the embrittlement of steel to deteriorate manufacturability (i.e., rolling property). Therefore, the upper limit of the Si content should be 4.5% or less. Preferably, the Si content should be between 2.0% and 4.0%.

However, when Si is contained in steel by siliconizing treatment using a known method such as CVD or PVD method after the final cold rolling, the Si content in the steel material may be lower than the above range. Specifically, the Si content in the steel sheet after the siliconizing treatment may be in the range of 1.0 to 7.5%. The reason for setting the upper limit of the Si content at 7.5% is that there is no rolling process, which is likely to cause the sheet to crack, at a later stage, even if the steel becomes brittle due to Si contained therein. However, since the excessive Si content reduces the magnetic flux density, the preferable upper limit is 7.0%.

### Mn: 2.00% or less

Mn is an element that can increase specific resistance. However, since the excessive addition of Mn increases the raw material cost, the upper limit of the Mn content is set at 2.00% or less. Note that the upper limit of the Mn content is preferably 0.5% or less from the viewpoint of reducing the adverse effects of the precipitation of MnS on iron loss.

### P: 0.10% or less

P has the effect of increasing the strength of the steel sheet and improving the punchability. However, since P also causes embrittlement of the steel sheet, the upper limit of the P content is set at 0.10%, preferably 0.05% or less.

### S: 0.0040% or less

S forms MnS and adversely affects the magnetic properties. Therefore, the upper limit of the S content is set at 0.0040% or less, preferably 0.0030% or less.

The steel material used for producing a non-oriented electrical steel sheet of the present invention may further contain the following ingredients in addition to the above ingredients.

### Al: 0.0001 to 2.0%

Al is an element that can increase the specific resistance and is effective in reducing iron loss. Meanwhile, the excessive Al content reduces the magnetic flux density. Therefore, the upper limit of the Al content is preferably 2.0%, more preferably 1.5% or less.

### N: 0.003% or less

N forms nitride with Al or Si and thus deteriorates the magnetic properties. Therefore, the N content is preferably 0.003% or less, preferably 0.002% or less, more preferably 0.0009% or less.

### Ca: 0.0005 to 0.010%

Ca fixes S by appropriate heat treatment and thus suppresses the formation of fine S precipitates which are disadvantageous to the magnetic properties. Therefore, Ca may be added in the range of 0.0005% to 0.010%.

### Cr: 0.001 to 0.05%

Cr increases specific resistance and is advantageous in reducing the iron loss. Therefore, Cr may be added in the range of 0.001% to 0.05%. However, the excessive addition of Cr reduces the magnetic flux density.

### Cu: 0.001 to 0.5%

Cu fixes S by appropriate heat treatment and thus suppresses the formation of fine S precipitates which are disadvantageous to the magnetic properties. Therefore, Cu may be added in the range of 0.001% to 0.5%.

### Sb: 0.001 to 0.05%

Sb, like Sn, is segregated on the steel sheet surface during annealing, preventing nitrogen from penetrating into the steel sheet to suppress the formation of nitride which may cause the deterioration of the magnetic properties. Therefore, the Sb content may be 0.001% or more. However, the excessive addition of Sb increases the raw material cost. Therefore, the Sb content is preferably 0.05% or less, more preferably 0.01% or less.

### Sn: 0.001 to 0.05%

Sn is segregated on the surface of the steel sheet during annealing, preventing nitrogen from penetrating into the steel sheet, which suppresses the formation of nitride which may deteriorate the magnetic properties. Therefore, the Sn content may be 0.001% or more. However, since the excessive addition of Sn increases the raw material costs, the Sn content is preferably 0.05% or less, more preferably, 0.01% or less.

### B: 0.0001 to 0.005%

B forms nitride by appropriate heat treatment, preventing the formation of fine nitride which is disadvantageous to the magnetic properties. Therefore, B content may be in the range of 0.0001% to 0.005%.

At least one element selected from the group consisting of Zn, Co, Mo, Ni, and W: a total content of 0.001 to 0.1%

### Zn: 0.001 to 0.1%

Zn has the effect of suppressing nitriding during finishing annealing. Therefore, when Zn is added, the Zn content should be 0.001% or more. Meanwhile, the Zn content of more than 0.1% forms sulfide, resulting in increasing iron loss. Therefore, the Zn content is limited to 0.1% or less, preferably in the range of 0.002% to 0.05%.

### Co: 0.001 to 0.1%

Co has the effect of improving the crystal orientation of steel. Therefore, when Co is added, the Co content should be 0.001% or more. Meanwhile, the Co content exceeding 0.1% saturates the above effect and also increases the addition cost. Therefore, the Co content should be 0.1% or less, preferably in the range of 0.002% to 0.05%.

### Mo and W: 0.001 to 0.1%

Mo and W are both effective in suppressing surface defects (i.e., scabs) of the non-oriented electrical steel sheet of the present embodiment. Since the surface of the non-oriented electrical steel sheet of the present embodiment is made of high-alloy steel and is therefore easily oxidized, the occurrence rate of scabs resulting from surface cracking is high. However, the cracking can be suppressed by adding small amounts of Mo and W which are elements for increasing high-temperature strength. The above effect can be sufficiently achieved with the total content of Mo and W of less than 0.001%, but is saturated with the total content of Mo and W of more than 0.1%, which only increases the alloy costs. Therefore, when Mo and W are added, the total content thereof should be in the range of 0.001% to 0.1%, preferably in the range of 0.0050% to 0.050%. Note that when Mo or W is contained alone, each content should be in the range of 0.001% to 0.1% for reasons similar to the above.

### Ni: 0.001 to 0.1%

Ni increases specific resistance and is advantageous in reducing iron loss. Thus, when Ni is added, the N content should be in the range of 0.001% to 0.1%. However, the excessive addition of Ni reduces the magnetic flux density.

At least one element selected from the group consisting of O, Mg, REM, Ti, Nb, V, Ta, Ge, Pb, As, and Ga: total content of 0.001 to 0.05%

### O, Ti, Nb, V, Ta, Pb, and As: 0.001 to 0.05%

O, Ti, Nb, V, Ta, Pb, and As form carbonitride, sulfide, or oxide which cause the deterioration of the magnetic properties. Thus, when these elements are added, the content of each element should be in the range of 0.001% to 0.05%.

### Mg and REM: 0.001 to 0.05%

Mg and REM form stable sulfide and thus have the effect of improving the grain growth properties. To obtain the effect, the total content of Mg and REM should be 0.001% or more. However, since the total content of Mg and REM of more than 0.05% saturates such an effect, when Mg and REM are added, their total content is set in the range of 0.001% to 0.05%. Note that when Mg or REM is contained alone, the content of Mg or REM is set in the range of 0.001% to 0.05% for reasons similar to the above.

### Ge and Ga: 0.001 to 0.05%

Ge and Ga have the effect of improving the texture. This effect cannot be obtained sufficiently when the total content of Ge and Ga is less than 0.001%, but is saturated when the total content of Ge and Ga is more than 0.05%, increasing the cost of the alloy. Accordingly, when Ge and Ga are added, their total content should be in the range of 0.001% to 0.05%, preferably in the range of 0.005% to 0.05%. Note that when Ge or Ga is contained alone, each content should be in the range of 0.001% to 0.05% for reasons similar to the above.

Since Zr forms carbonitride or sulfide that may cause the deterioration of the magnetic properties, the Zr content should be less than 0.001%.

Next, the non-oriented electrical steel sheet of the present invention will be described.

### <Crystal orientations>

The non-oriented electrical steel sheet of the present invention is characterized in that its crystal orientations preferentially include the {100} plane orientation. Herein, the phrase "preferentially include the {100} plane orientation" means that, in an orientation distribution function (ODF) represented in the Euler space where 0 ≤ φ 1 ≤ 90°, φ2 = 45°, and 0 ≤ Φ ≤ 90°, the maximum intensity is obtained within Φ = 0°. The ODF is obtained by exposing the central layer in the thickness direction of the sheet and then analyzing it by the EBSD method or X-ray diffractometry. When the EBSD method is used, the ODF is calculated by including a sufficient number of crystal grains, at least 5000 crystal grains, in the analysis. When X-ray diffractometry is used, an incomplete pole figure of three planes: {110}, {200}, and {211} is measured first, and then, the ODF is calculated based on the incomplete pole figure using the ADC method or a method using spherical harmonics. The ODF is determined on the Euler space represented by the three angles: φ1, φ2, and Φ (i.e., Bunge method). That is, the abundance of crystals with the orientation specified by the Eulerian angles (φ1,Φ, φ2) can be known from the ODF.

In the Bunge method, the ODF is originally defined in a space where φ1 is 0 to 360°, φ2 is 0 to 360°, and Φ is 0 to 180°. However, since the crystal grains of the non-oriented electrical steel sheet of the present invention are highly symmetric cubic crystals, their orientation space can be represented by φ1, φ2, and Φ each being 0 to 90°.

In addition, the crystal orientations of the non-oriented electrical steel sheet of the present invention are characterized in that, among the { 100} plane orientation, {100}<001> called "cube orientation" is generated with high frequency. That is, the ODF intensity is high at φ1 = 45°, Φ = 0°, and φ2 = 45° corresponding to the cube orientation. Specifically, the ODF intensity needs to be 4.0 or more. Preferably, the ODF intensity of the cube orientation is 5.0 or more.

The texture that represents the abundance of crystals with the orientation specified by the Eulerian angles (φ1, Φ, φ2) is represented as the density in a three-dimensional space that has the Eulerian angles (φ1, Φ, φ2) as the Cartesian coordinates. However, such a texture is often represented two-dimensionally using a cross-section (i.e., φ1-Φ cross-section) with Φ2 being constant. Thus, a texture figure (i.e., crystal orientation density distribution) of φ1-Φ with φ2 = 45° of the present invention is considered. Herein, the ODF intensity refers to the abundance of crystals with the orientation specified by the Eulerian angles (φ1, Φ, φ2), that is, crystal orientation density.

The phrase "the maximum intensity is obtained within Φ=0°" means that in the texture figure of φ1-Φ with φ2 = 45°, the maximum ODF intensity is obtained at Φ = 0°. In addition, the phrase "the ODF intensity at φ1 = 45°, φ2 = 45°, and Φ = 0° is 4 or more" means that in the texture figure of φ1-Φ with φ2 = 45°, the orientation intensity at φ1 = 45° and Φ = 0° is 4.0 or more.

### <Average crystal grain size in rolling direction>

The crystal grain size in the present invention is calculated using, for example, the linear analysis (JIS G0551) by exposing the central layer in the thickness direction of the sheet, polishing and etching the exposed layer to obtain a sample surface, and then observing it using EBSD method or an optical microscope. The crystal grain size has an influence on the structure of a magnetic domain, and coarse crystal grain size increases high-frequency iron loss. Therefore, the crystal grain size is preferably smaller. The average crystal grain size of the primary recrystallized grains is typically 0.5 mm or less, but it is preferably 0.20 mm or less in the present invention.

Next, a method for producing a non-oriented electrical steel sheet of the present invention will be described.

A slab adjusted in a steelmaking step to have the above-described ingredient composition according to the present invention is preferably heated to a temperature of 1200°C or lower before being subjected to hot rolling. If the temperature is higher than 1200°C, fine dispersion of MnS and AlN may occur at a step after the hot rolling, which may suppress the grain growth. The slab is more preferably heated to 1150°C or lower.

The slab heated to the above temperature is then subjected to hot rolling, in which the finish rolling temperature should be 700 to 900°C and the winding temperature should be 600°C or lower. The finishing temperature lower than 700°C increases the rolling load during the hot rolling, while the finishing temperature higher than 900°C hardly controls the shape of the steel sheet in the hot rolling, which is unfavorable. In addition, the winding temperature that is too high as higher than 600°C causes fine AlN particles to be dispersed and precipitated, thus hindering the grain growth during hot-band annealing or finishing annealing, which is unfavorable.

In the present invention, it is inevitable to perform cold rolling twice and it is necessary to increase the rolling reduction of the first cold rolling. Therefore, the finishing thickness of the hot rolling should be larger, preferably 3.8 mm or more. This is because, if the finishing thickness is small, the subsequent cold rolling cannot be performed at a large rolling reduction. Note that the upper limit of the finishing thickness is not limited to a specific value, but the steel thickness that is too large affects manufacturability including weldability. Therefore, the upper limit is preferably 6 mm.

The hot-rolled steel sheet may be subjected to hot-band annealing before it is subjected to cold rolling. Hot-band annealing can improve magnetic properties more than when it is not performed but also has the disadvantage of increasing the production cost.

The first cold rolling step needs to be performed at a high rolling reduction as described later. However, if the rolling reduction is as high as 95% or more, it is preferable to perform hot-band annealing in advance to soften the sheet and reduce the rolling load. The hot-band annealing may be performed in a nitrogen atmosphere but is preferably performed in a hydrogen atmosphere or an Ar atmosphere. This is because, if annealing is performed in a nitrogen atmosphere, nitrogen will penetrate into the base metal, resulting in the precipitation of silicon nitride which may deteriorate the magnetic properties. The soaking temperature of the hot-band annealing is preferably 750°C or higher, and the upper limit of the soaking temperature is preferably 1200°C.

Next, the hot-rolled sheet subjected to the hot rolling or the hot-band annealing is further subjected to pickling with hydrochloric acid, etc., for descaling, and is then subjected to a two-step cold rolling process to obtain a cold-rolled sheet. The two-step cold rolling process refers to a cold rolling process that includes an intermediate annealing step between two cold rolling steps.

In the present invention, the first cold rolling needs to be performed at a high rolling reduction of 92% or more. If the rolling reduction is less than 92%, grains with the { 100} orientation will not be formed sufficiently after the final annealing described below. The upper limit of the rolling reduction is not limited to a specific value but is preferably 98% to avoid the excessive rolling load.

The rolling temperature for the steel sheet in the first cold rolling is preferably between 150°C and 300°C. A rolling temperature of 150°C or higher causes a deformation band to be formed in the steel sheet during the cold-rolling at a high rolling reduction, resulting in more grains with the { 100} orientation being formed from the deformation band after the subsequent intermediate annealing. Meanwhile, since rolling at a temperature higher than 300°C causes excessive rolling load, the rolling temperature is preferably 300°C or lower.

The intermediate annealing subsequent to the first cold rolling is preferably performed at a soaking temperature of 600°C or higher to allow the rolling texture to be recrystallized. More preferably, the soaking temperature is 900°C or higher, and the upper limit thereof is 1200°C. The intermediate annealing is preferably performed in a hydrogen atmosphere or an Ar atmosphere as in the hot-band annealing.

The second cold rolling subsequent to the intermediate annealing needs to be performed at a rolling reduction between 30% and 80%. At the rolling reduction of less than 30%, strain, which is the driving force for recrystallization, cannot accumulate sufficiently, and the crystal grains become excessively coarse due to strain-induced grain growth during annealing, resulting in increased high-frequency iron loss. Therefore, the rolling reduction is preferably 40% or more. Meanwhile, the rolling reduction of more than 80% increases the number of grains with the {111} orientation which are preferentially recrystallized from regions around the grain boundaries and are disadvantageous to the magnetic properties. Preferably, the rolling reduction is 65% or less.

The rolling temperature for the steel sheet in the second cold rolling step is preferably between 50°C and 150°C. The rolling temperature 50°C or higher facilitates the diffusion of C throughout the steel sheet to thus fix the dislocation by C during the cold rolling. This can accelerate the development of a deformation band in the steel strip, so that a larger number of grains with the { 100} orientation can be formed from the deformation band after the finishing annealing. Meanwhile, the rolling temperature at a temperature higher than 150°C saturates the above effect and causes excessive rolling load. Therefore, the upper limit is preferably 150°C or lower.

The final thickness of the cold rolling, that is, the thickness of the sheet after the second cold rolling step, is preferably 0.20 mm or less. The larger final thickness increases the high-frequency iron loss. Therefore, the final thickness is preferably small, more preferably 0.10 mm or less. Meanwhile, if the final thickness is extremely small, the load of the cold rolling, will increase and productivity will be reduced. In addition, the handling performance of the steel sheet will be reduced, and deformation such as bending, is more likely to occur, resulting in deteriorated magnetic properties. Therefore, the lower limit is preferably 0.05 mm.

The steel sheet that has been cold-rolled to the final thickness is subjected to the final annealing, and an insulating coating is formed by being applied and baked. The soaking temperature of the final annealing is preferably 700°C or higher to recrystallize the rolling texture and obtain an average crystal grain size of 0.20 mm or less in the rolling direction. Note that the upper limit of the final annealing temperature is preferably 1200°C. This is because the temperature higher than 1200°C increases the facility cost. The final annealing atmosphere is preferably a reducing atmosphere, such as a hydrogen atmosphere or an Ar atmosphere, or a reduced-pressure atmosphere of 10 kPa or less.

However, in the case where stress-relief annealing is performed on the assembled iron core at a temperature of 700°C or higher to cause recrystallization, it is possible to perform the final annealing at a temperature lower than 700°C after the second cold rolling so that non-recrystallized texture remains to thereby increase the strength, and then, after a rotor core and stator core are produced, perform the stress-relief annealing described below on the stator core to completely recrystallize the texture and thus reduce iron loss. Thus, when the final annealing is conducted such that the non-recrystallized texture remains and the texture is completely recrystallized by the stress-relief annealing described below, the requirement of the crystal texture of the present invention is applied to the steel sheet subjected to the stress-relief annealing.

The insulation coating may be formed separately from the final annealing, but in the present invention, the final annealing step includes the insulation coating forming step.

In the present invention, Si may be contained in steel by siliconizing treatment using a known method, such as the CVD or PVD method in the final annealing step.

A motor core typically includes a rotor core and a stator core. An electrical steel sheet used for the rotor core desirably has a high strength to withstand the centrifugal force generated by high-speed rotation. Meanwhile, an electrical steel sheet used for the stator core desirably has high magnetic flux density and low iron loss to achieve downsizing and higher output of the motor. Therefore, in the present invention, rotor core materials and stator core materials both having the shape of an iron core are taken out from a non-oriented electrical steel sheet obtained by the above production method of the present invention, and then, a rotor core is produced by laminating the rotor core material while a stator core is produced by laminating the stator core material and then performing stress-relief annealing thereon. A motor with a motor core including the rotor core and the stator core produced by the above method has excellent properties including high torque and high efficiency.

Herein, the stress-relief annealing is preferably performed at a temperature of 700°C or higher. This is because if the non-recrystallized texture is still present after the finishing annealing, it will be difficult to completely recrystallize the texture at a temperature lower than 700°C, and also, strain generated during the punching work cannot be removed. Note that the stress-relief annealing is preferably conducted in a non-oxidizing atmosphere.

### Examples

Steels with the chemical ingredient composition shown in Tables 3-1 and 3-2 were melted in a low-pressure atmosphere, and each was cast into a steel ingot and cut to form a slag.

**Table 3-1**

| Steel symbol | Ingredient composition (mass%) | | | | | | Remarks |
|---|---|---|---|---|---|---|---|
| | C | Si | Mn | P | S | Others | |
| A | 0.0020 | 3.5 | 0.04 | 0.002 | 0.0008 | - | Invention steel |
| B | 0.0010 | 2.5 | 0.10 | 0.050 | 0.0020 | Ca:0.03 | Invention steel |
| C | 0.0030 | 3.2 | 0.03 | 0.007 | 0.0015 | Al:2.0 | Invention steel |
| D | 0.0020 | 3.2 | 0.05 | - | 0.0007 | Cu:0.03, Al:0.5 | Invention steel |
| E | 0.0020 | 3.5 | 0.25 | - | 0.0008 | Sb:0.05 | Invention steel |
| F | 0.0010 | 3.2 | 0.25 | 0.030 | 0.0010 | B:0.005, Cr:0.01, Sn:0.03 | Invention steel |
| G | 0.0015 | 1.5 | 0.03 | 0.070 | 0.0006 | - | Invention steel |
| H | 0.0014 | 1.1 | 0.50 | 0.050 | 0.0015 | - | Invention steel |
| I | 0.0025 | 4.4 | 0.10 | 0.010 | 0.0018 | - | Invention steel |
| J | 0.0021 | 2.8 | 1.00 | 0.010 | 0.0022 | - | Invention steel |
| K | 0.0029 | 2.8 | 1.50 | 0.010 | 0.0022 | - | Invention steel |
| L | 0.0029 | 2.8 | 1.90 | 0.010 | 0.0022 | - | Invention steel |
| M | 0.0024 | 3.2 | 0.30 | 0.010 | 0.0015 | N:0.0035 | Invention steel |
| N | 0.0021 | 3.1 | 0.15 | 0.010 | 0.0022 | Mo:0.04 | Invention steel |
| O | 0.0019 | 2.8 | 0.50 | 0.010 | 0.0019 | Nb:0.0011 | Invention steel |
| P | 0.0023 | 3.6 | 0.20 | 0.010 | 0.0020 | N:0.0028, Cu:0.04, Mo:0.05 | Invention steel |
| Q | 0.0028 | 3.8 | 0.40 | 0.006 | 0.0026 | Ni:0.05 | Invention steel |
| R | 0.0025 | 3.4 | 0.80 | 0.008 | 0.0011 | Cr:0.05 | Invention steel |
| S | 0.0026 | 4.2 | 0.10 | 0.005 | 0.0012 | Sn:0.04 | Invention steel |

**Table 3-2**

| Steel symbol | Ingredient composition (mass%) | | | | | | Remarks |
|---|---|---|---|---|---|---|---|
| | C | Si | Mn | P | S | Others | |
| T | 0.0021 | 3.1 | 0.15 | 0.010 | 0.0022 | Zn:0.003% | Invention steel |
| U | 0.0021 | 3.1 | 0.15 | 0.010 | 0.0022 | Zn:0.050% | Invention steel |
| V | 0.0021 | 3.1 | 0.15 | 0.010 | 0.0022 | Co:0.025% | Invention steel |
| W | 0.0021 | 3.1 | 0.15 | 0.010 | 0.0022 | Co:0.070% | Invention steel |
| X | 0.0021 | 3.1 | 0.15 | 0.010 | 0.0022 | W:0.050% | Invention steel |
| Y | 0.0021 | 3.1 | 0.15 | 0.010 | 0.0022 | Zn:0.004%, Co : 0.01% | Invention steel |
| Z | 0.0028 | 3.8 | 0.40 | 0.006 | 0.0026 | Mg:0.002% | Invention steel |
| AA | 0.0028 | 3.8 | 0.40 | 0.006 | 0.0026 | Mg:0.03% | Invention steel |
| BB | 0.0028 | 3.8 | 0.40 | 0.006 | 0.0026 | REM:0.003% | Invention steel |
| CC | 0.0028 | 3.8 | 0.40 | 0.006 | 0.0026 | REM:0.040% | Invention steel |
| DD | 0.0028 | 3.8 | 0.40 | 0.006 | 0.0026 | Mg:0.005%, REM:0.01% | Invention steel |
| EE | 0.0028 | 3.8 | 0.40 | 0.006 | 0.0026 | Ge:0.002% | Invention steel |
| FF | 0.0028 | 3.8 | 0.40 | 0.006 | 0.0026 | Ge:0.01% | Invention steel |
| GG | 0.0028 | 3.8 | 0.40 | 0.006 | 0.0026 | Ge:0.04% | Invention steel |
| HH | 0.0028 | 3.8 | 0.40 | 0.006 | 0.0026 | Ga:0.005% | Invention steel |
| II | 0.0028 | 3.8 | 0.40 | 0.006 | 0.0026 | Ga:0.030% | Invention steel |
| JJ | 0.0028 | 3.8 | 0.40 | 0.006 | 0.0026 | Ge:0.004%, Ga:0.005% | Invention steel |
| KK | 0.0026 | 4.2 | 0.10 | 0.005 | 0.0012 | O:0.005% | Invention steel |
| LL | 0.0026 | 4.2 | 0.10 | 0.005 | 0.0012 | Ti:0.0035% | Invention steel |
| MM | 0.0026 | 4.2 | 0.10 | 0.005 | 0.0012 | Nb:0.006% | Invention steel |
| NN | 0.0026 | 4.2 | 0.10 | 0.005 | 0.0012 | V:0.005% | Invention steel |
| OO | 0.0026 | 4.2 | 0.10 | 0.005 | 0.0012 | Ta:0.007% | Invention steel |
| PP | 0.0026 | 4.2 | 0.10 | 0.005 | 0.0012 | Pb:0.001% | Invention steel |
| QQ | 0.0026 | 4.2 | 0.10 | 0.005 | 0.0012 | As:0.005% | Invention steel |

The slabs were heated to 1100°C and then subjected to hot rolling, so that hot-rolled sheets with thicknesses shown in Tables 4-1 to 4-3 were obtained. The finishing temperature and winding temperature of the hot rolling were set to 1000°C to 900°C and 600 to 550°C, respectively. Next, the hot-rolled sheets were subjected to hot-band annealing, two cold rolling with intermediate annealing between each rolling, and the final annealing under the conditions shown in Tables 4-1 to 4-3, so that non-oriented electrical steel sheets were obtained. Note that some of the steel sheets were subjected to siliconizing treatment by the CVD method as the final annealing so that diffusion annealing was performed. In the treatment, the hot-band annealing was performed in a nitrogen atmosphere, and the other annealing steps were all performed in an Ar atmosphere.

Next, the magnetic properties, average crystal grain size, the texture of each steel sheet subjected to the final annealing were measured under the following conditions.

The magnetic properties were measured by cutting a set of four test specimens of 280 mm in length and 30 mm in width, from each steel sheet after the final annealing, consisting of two with the longitudinal direction in the rolling direction and the other two with the longitudinal direction in a direction perpendicular to the rolling direction and measuring the magnetic flux density B₅₀ and the iron loss W_{10/400} by an Epstein test to determine their mean values. Note that, for some of the steel sheets, rings each with an outside diameter of 100 mm φ and an inside diameter of 60 mm φ were punched from the steel sheets subjected to the final annealing, and the obtained rings were laminated to a thickness of 10 mm using an acrylic-based adhesive to form a ring core. The ring core was then subjected to stress-relief annealing at 800°C for 10 minutes, followed by measurement of the magnetic properties.

The texture and average crystal grain size were measured as follows. A test specimen was cut from each steel sheet subjected to the final annealing, and the central layer in the thickness direction of the sheet was exposed by chemical polishing. The texture of the surface of the central layer was measured with X-rays, and the average crystal grain size from the texture was measured with a microscope using the linear intercept method.

**Table 4-1**

| Steel sheet 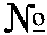 | Steel symbol | Final thickness of hot rolling (mm) | Hot-band annealing (temperature× time) | First cold rolling | | Intermediate annealing (temperature× time) | Second cold rolling | | Final annealing (temperature× time) | Siliconizing Treatment | | Stress-relief annealing |
|---|---|---|---|---|---|---|---|---|---|---|---|---|
| | | | | Rolling reduction (%) | Intermediate thickness (mm) | | Rolling reduction (%) | Final thickness (mm) | | Conducted or not | Si (mass%) after treatment | |
| 1 | D | 1.8 | 900°C×30sec | 72.2 | 0.50 | 900°C×60sec | 60.0 | 0.20 | 1000°C×10sec | Not conducted | - | Not conducted |
| 2 | D | 1.8 | 900°C×30sec | 86.1 | 0.25 | 900°C×60sec | 64.0 | 0.09 | 1000°C×10sec | Not conducted | - | Not conducted |
| 3 | D | 1.8 | 900°C×30sec | 90.6 | 0.17 | 900°C×60sec | 64.7 | 0.06 | 1000°C×10sec | Not conducted | - | Not conducted |
| 4 | A | 4.2 | 900°C×30sec | 94.0 | 0.25 | 1000°C×20sec | 60.0 | 0.10 | 950°C×10sec | Not conducted | - | Not conducted |
| 5 | A | 5.2 | 1000°C×10sec | 92.3 | 0.40 | 1000°C×20sec | 50.0 | 0.20 | 950°C×10sec | Not conducted | - | Not conducted |
| 6 | B | 4.0 | 1000°C×10sec | 95.0 | 0.20 | 950°C×30sec | 65.0 | 0.07 | 1200°C×90sec | CVD | 6.5 | Not conducted |
| 7 | C | 5.4 | 950°C×30sec | 93.5 | 0.35 | 1000°C×20sec | 42.9 | 0.20 | 1000°C×10sec | Not conducted | - | Not conducted |
| 8 | D | 4.5 | 900°C×30sec | 94.9 | 0.23 | 900°C×60sec | 56.5 | 0.10 | 1000°C×10sec | Not conducted | - | Not conducted |
| 9 | E | 3.8 | Not conducted | 94.7 | 0.20 | 1000°C×20sec | 50.0 | 0.10 | 1000°C×10sec | Not conducted | - | Not conducted |
| 10 | F | 4.2 | 900°C×30sec | 95.2 | 0.20 | 900°C×60sec | 55.0 | 0.09 | 950°C×10sec | Not conducted | - | Not conducted |
| 11 | G | 4.0 | 900°C×30sec | 95.0 | 0.20 | 950°C×30sec | 60.0 | 0.08 | 1200°C×90sec | CVD | 6.5 | Not conducted |
| 12 | E | 5.0 | 1000°C×20sec | 96.0 | 0.20 | 1000°C×20sec | 50.0 | 0.10 | 600°C×10sec | Not conducted | - | Conducted (800°C×10min) |
| 13 | H | 4.0 | Not conducted | 93.8 | 0.25 | 900°C×30sec | 60.0 | 0.10 | 920°C×10sec | Not conducted | - | Not conducted |
| 14 | I | 4.5 | 900°C×30sec | 93.3 | 0.30 | 950°C×30sec | 40.0 | 0.18 | 950°C×10sec | Not conducted | - | Not conducted |
| 15 | J | 4.6 | 950°C×30sec | 92.4 | 0.35 | 950°C×30sec | 57.1 | 0.15 | 1000°C×10sec | Not conducted | - | Not conducted |
| 16 | K | 5.0 | 980°C×30sec | 92.2 | 0.39 | 950°C×30sec | 74.4 | 0.10 | 1000°C×10sec | Not conducted | - | Not conducted |
| 17 | L | 5.3 | 950°C×30sec | 92.5 | 0.40 | 950°C×30sec | 75.0 | 0.10 | 1000°C×10sec | Not conducted | - | Not conducted |
| 18 | M | 5.2 | 960°C×30sec | 92.3 | 0.40 | 980°C×30sec | 75.0 | 0.10 | 980°C×10sec | Not conducted | - | Not conducted |
| 19 | N | 5.2 | 960°C×30sec | 92.3 | 0.40 | 980°C×30sec | 75.0 | 0.10 | 980°C×10sec | Not conducted | - | Not conducted |
| 20 | O | 5.2 | 960°C×30sec | 92.3 | 0.40 | 980°C×30sec | 75.0 | 0.10 | 980°C×10sec | Not conducted | - | Not conducted |
| 21 | P | 5.2 | 960°C×30sec | 92.3 | 0.40 | 980°C×30sec | 75.0 | 0.10 | 980°C×10sec | Not conducted | - | Not conducted |
| 22 | Q | 4.9 | 960°C×30sec | 92.9 | 0.35 | 980°C×30sec | 71.4 | 0.10 | 980°C×10sec | Not conducted | - | Not conducted |
| 23 | R | 4.9 | 960°C×30sec | 92.9 | 0.35 | 980°C×30sec | 71.4 | 0.10 | 980°C×10sec | Not conducted | - | Not conducted |
| 24 | S | 4.9 | 960°C×30sec | 92.9 | 0.35 | 980°C×30sec | 71.4 | 0.10 | 980°C×10sec | Not conducted | - | Not conducted |
| 25 | T | 5.2 | 960°C×30sec | 92.3 | 0.40 | 980°C × 30sec | 75.0 | 0.10 | 980°C×10sec | Not conducted | - | Not conducted |

**Table 4-2**

| Steel sheet 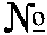 | Steel symbol | Final thickness of hot rolling (mm) | Hot-band annealing (temperature× time) | First cold rolling | | Intermediate annealing (temperature× time) | Second cold rolling | | Final annealing (temperature× time) | Siliconizing Treatment | | Stress-relief annealing |
|---|---|---|---|---|---|---|---|---|---|---|---|---|
| | | | | Rolling reduction (%) | Intermediate thickness (mm) | | Rolling reductio n(%) | Final thickness (mm) | | Conducted or not | Si (mass%) after treatment | |
| 26 | U | 5.2 | 960°C×30sec | 92.3 | 0.40 | 980°C×30sec | 75.0 | 0.1 | 980°C×10sec | Not conducted | - | Not conducted |
| 27 | V | 5.2 | 960°C×30sec | 92.3 | 0.40 | 980°C×30sec | 75.0 | 0.1 | 980°C×10sec | Not conducted | - | Not conducted |
| 28 | W | 5.2 | 960°C×30sec | 92.3 | 0.40 | 980°C×30sec | 75.0 | 0.1 | 980°C×10sec | Not conducted | - | Not conducted |
| 29 | X | 5.2 | 960°C×30sec | 92.3 | 0.40 | 980°C×30sec | 75.0 | 0.1 | 980°C×10sec | Not conducted | - | Not conducted |
| 30 | Y | 5.2 | 960°C×30sec | 92.3 | 0.40 | 980°C×30sec | 75.0 | 0.1 | 980°C×10sec | Not conducted | - | Not conducted |
| 31 | Z | 4.9 | 960°C×30sec | 92.9 | 0.35 | 980°C×30sec | 71.4 | 0.1 | 980°C×10sec | Not conducted | - | Not conducted |
| 32 | AA | 4.9 | 960°C×30sec | 92.9 | 0.35 | 980°C×30sec | 71.4 | 0.1 | 980°C×10sec | Not conducted | - | Not conducted |
| 33 | BB | 4.9 | 960°C×30sec | 92.9 | 0.35 | 980°C×30sec | 71.4 | 0.1 | 980°C×10sec | Not conducted | - | Not conducted |
| 34 | CC | 4.9 | 960°C×30sec | 92.9 | 0.35 | 980°C×30sec | 71.4 | 0.1 | 980°C×10sec | Not conducted | - | Not conducted |
| 35 | DD | 4.9 | 960°C×30sec | 92.9 | 0.35 | 980°C×30sec | 71.4 | 0.1 | 980°C×10sec | Not conducted | - | Not conducted |
| 36 | EE | 4.9 | 960°C×30sec | 92.9 | 0.35 | 980°C×30sec | 71.4 | 0.1 | 980°C×10sec | Not conducted | - | Not conducted |
| 37 | FF | 4.9 | 960°C×30sec | 92.9 | 0.35 | 980°C×30sec | 71.4 | 0.1 | 980°C×10sec | Not conducted | - | Not conducted |
| 38 | GG | 4.9 | 960°C×30sec | 92.9 | 0.35 | 980°C×30sec | 71.4 | 0.1 | 980°C×10sec | Not conducted | - | Not conducted |
| 39 | HH | 4.9 | 960°C×30sec | 92.9 | 0.35 | 980°C×30sec | 71.4 | 0.1 | 980°C×10sec | Not conducted | - | Not conducted |
| 40 | II | 4.9 | 960°C×30sec | 92.9 | 0.35 | 980°C×30sec | 71.4 | 0.1 | 980°C×10sec | Not conducted | - | Not conducted |
| 41 | JJ | 4.9 | 960°C×30sec | 92.9 | 0.35 | 980°C×30sec | 71.4 | 0.1 | 980°C×10sec | Not conducted | - | Not conducted |
| 42 | KK | 4.9 | 960°C×30sec | 92.9 | 0.35 | 980°C×30sec | 71.4 | 0.1 | 980°C×10sec | Not conducted | - | Not conducted |
| 43 | LL | 4.9 | 960°C×30sec | 92.9 | 0.35 | 980°C×30sec | 71.4 | 0.1 | 980°C×10sec | Not conducted | - | Not conducted |
| 44 | MM | 4.9 | 960°C×30sec | 92.9 | 0.35 | 980°C×30sec | 71.4 | 0.1 | 980°C×10sec | Not conducted | - | Not conducted |
| 45 | NN | 4.9 | 960°C×30sec | 92.9 | 0.35 | 980°C×30sec | 71.4 | 0.1 | 980°C×10sec | Not conducted | - | Not conducted |
| 46 | OO | 4.9 | 960°C×30sec | 92.9 | 0.35 | 980°C×30sec | 71.4 | 0.1 | 980°C×10sec | Not conducted | - | Not conducted |
| 47 | PP | 4.9 | 960°C×30sec | 92.9 | 0.35 | 980°C×30sec | 71.4 | 0.1 | 980°C×10sec | Not conducted | - | Not conducted |
| 48 | QQ | 4.9 | 960°C×30sec | 92.9 | 0.35 | 980°C×30sec | 71.4 | 0.1 | 980°C×10sec | Not conducted | - | Not conducted |
| 49 | A | 5.2 | 1000°C×10sec | 92.3 | 0.40 | 1000°C×20sec | 50.0 | 0.2 | 950°C×10sec | Not conducted | - | Not conducted |
| 50 | A | 5.2 | 1000°C×10sec | 92.3 | 0.40 | 1000°C×20sec | 50.0 | 0.2 | 950°C×10sec | Not conducted | - | Not conducted |
| 51 | A | 5.2 | 1000°C×10sec | 92.3 | 0.40 | 1000°C×20sec | 50.0 | 0.2 | 950°C×10sec | Not conducted | - | Not conducted |

**Table 4-3**

| Steel sheet 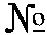 | Steel symbol | Final thickness of hot rolling (mm) | Hot-band annealing (temperature× time) | First cold rolling | | Intermediate annealing (temperature× time) | Second cold rolling | | Final annealing (temperature× time) | Siliconizing Treatment | | Stress-relief annealing |
|---|---|---|---|---|---|---|---|---|---|---|---|---|
| | | | | Rolling reduction (%) | Intermediate thickness (mm) | | Rolling reduction (%) | Final thickness (mm) | | Conducted or not | Si (mass%) after treatment | |
| 52 | A | 4.2 | 900°C×30sec | 94.0 | 0.14 | 1000°C×20sec | 28.6 | 0.10 | 950°C×10sec | Not conducted | - | Not conducted |
| 53 | A | 4.2 | 900°C×30sec | 94.0 | 0.15 | 1000°C×20sec | 33.3 | 0.10 | 950°C×10sec | Not conducted | - | Not conducted |
| 54 | A | 4.2 | 900°C×30sec | 94.0 | 0.45 | 1000°C×20sec | 77.8 | 0.10 | 950°C×10sec | Not conducted | - | Not conducted |
| 55 | A | 4.2 | 900°C×30sec | 94.0 | 0.60 | 1000°C×20sec | 83.3 | 0.10 | 950°C×10sec | Not conducted | - | Not conducted |
| 56 | A | 4.2 | 900°C×30sec | 94.0 | 0.25 | 1000°C×20sec | 60.0 | 0.10 | 950°C×10sec | Not conducted | - | Not conducted |

Tables 5-1 to 5-3 show the measurement results. The magnetic properties of a steel sheet vary greatly depending on the components (especially, Si and Mn) and thickness of the sheet. Thus, the magnetic properties were evaluated by comparing them with reference values defined by the following expressions which take this into account.

The reference value of B₅₀ =1.78 - (Si × 0.04 + Mn × 0.15)

The reference value of W_{10/400} = 17.6 × t + 7.3

Herein, each of Si and Mn in the expression indicates its content (mass%), and t indicates the thickness (mm) of the steel sheet.

From Tables 5-1 to 5-3, the following is clarified.

Each of Invention Examples (Nos. 4 to 51) in which a two-step cold rolling process was adopted and the rolling reduction of the first cold rolling was set to 92% or more achieved good high-frequency iron loss, compared to those of Comparative Examples (Nos. 1 to 3) in which the rolling reduction of the first cold rolling step was set to 72.2 to 90.6%. This is considered because, as the ODF analysis values indicate, a cube orientation has developed in Invention Examples (Nos. 4 to 51) while the {111} orientation, which is more disadvantageous to the magnetic properties than the cube orientation, has developed in Comparative Examples (Nos. 1 to 3).

Further, the high-frequency iron loss W_{10/400} was 6.8 to 8.5 W/kg in Invention Examples (Nos. 4, 5, 8, 9, 10, and 13 to 51) having the average crystal grain size of 0.20 mm or less. Meanwhile, the high-frequency iron loss W_{10/400} was 9.1 W/kg in Invention Example (No. 7) having the average crystal grain size of 0.23 mm. This indicates that setting the average crystal grain size to 0.20 mm or less can further improve the high-frequency iron loss.

**Table 5-1**

| Steel sheet No. | First cold rolling | Second cold rolling | Average crystal grain size (mm) | Texture | | Magnetic properties | | | | | Remarks |
|---|---|---|---|---|---|---|---|---|---|---|---|
| | Rolling temperature (°C) | Rolling temperature (°C) | | Φ (°) at which ODF is maximum | ODF at cube | Bso(T) | Reference value (T) of B₅₀ | W_{10/400} (W/kg) | Reference Value (W/kg) of W_{10/400} | Measurement method | |
| 1 | 140 | 130 | 0.12 | 55 | 2.1 | 1.63 | 1.65 | 11.1 | 10.8 | Epstein | Comparative Example |
| 2 | 180 | 170 | 0.10 | 55 | 1.9 | 1.59 | 1.65 | 9.2 | 8.9 | Epstein | Comparative Example |
| 3 | 200 | 160 | 0.09 | 55 | 3.6 | 1.55 | 1.65 | 8.7 | 8.4 | Epstein | Comparative Example |
| 4 | 240 | 130 | 0.11 | 0 | 5.8 | 1.66 | 1.64 | 6.8 | 9.1 | Epstein | Invention Example |
| 5 | 220 | 80 | 0.16 | 0 | 6.1 | 1.70 | 1.64 | 8.1 | 10.8 | Epstein | Invention Example |
| 6 | 270 | 150 | 0.38 | 0 | 5.7 | 1.55 | 1.52 | 6.2 | 8.5 | Epstein | Invention Example |
| 7 | 240 | 70 | 0.23 | 0 | 6.8 | 1.68 | 1.65 | 9.1 | 10.8 | Epstein | Invention Example |
| 8 | 260 | 60 | 0.13 | 0 | 5.2 | 1.67 | 1.65 | 7.0 | 9.1 | Epstein | Invention Example |
| 9 | 260 | 55 | 0.18 | 0 | 7.4 | 1.71 | 1.64 | 7.2 | 9.1 | Epstein | Invention Example |
| 10 | 270 | 60 | 0.11 | 0 | 6.1 | 1.68 | 1.65 | 7.0 | 8.9 | Epstein | Invention Example |
| 11 | 270 | 100 | 0.35 | 0 | 6.5 | 1.56 | 1.52 | 6.4 | 8.7 | Epstein | Invention Example |
| 12 | 280 | 60 | 0.19 | 0 | 7.0 | 1.70 | 1.64 | 7.3 | 9.1 | Ring core | Invention Example |
| 13 | 240 | 100 | 0.07 | 0 | 5.7 | 1.78 | 1.73 | 8.1 | 9.1 | Epstein | Invention Example |
| 14 | 240 | 50 | 0.09 | 0 | 6.8 | 1.69 | 1.60 | 8.2 | 10.5 | Epstein | Invention Example |
| 15 | 220 | 70 | 0.13 | 0 | 6.1 | 1.72 | 1.65 | 7.9 | 9.9 | Epstein | Invention Example |
| 16 | 210 | 120 | 0.14 | 0 | 6.5 | 1.71 | 1.65 | 7.4 | 9.1 | Epstein | Invention Example |
| 17 | 220 | 130 | 0.13 | 0 | 6.7 | 1.70 | 1.64 | 7.1 | 9.1 | Epstein | Invention Example |
| 18 | 220 | 130 | 0.12 | 0 | 6.1 | 1.70 | 1.67 | 7.3 | 9.1 | Epstein | Invention Example |
| 19 | 220 | 130 | 0.12 | 0 | 6.2 | 1.70 | 1.67 | 7.2 | 9.1 | Epstein | Invention Example |
| 20 | 230 | 130 | 0.12 | 0 | 6.6 | 1.72 | 1.68 | 7.5 | 9.1 | Epstein | Invention Example |
| 21 | 220 | 130 | 0.12 | 0 | 5.9 | 1.68 | 1.65 | 6.9 | 9.1 | Epstein | Invention Example |
| 22 | 220 | 110 | 0.12 | 0 | 6.8 | 1.68 | 1.64 | 6.9 | 9.1 | Epstein | Invention Example |
| 23 | 200 | 110 | 0.12 | 0 | 6.7 | 1.69 | 1.65 | 7.0 | 9.1 | Epstein | Invention Example |
| 24 | 210 | 110 | 0.12 | 0 | 6.5 | 1.68 | 1.63 | 6.9 | 9.1 | Epstein | Invention Example |
| 25 | 220 | 130 | 0.13 | 0 | 6.3 | 1.71 | 1.67 | 7.1 | 9.1 | Epstein | Invention Example |

**Table 5-2**

| Steel sheet No. | First cold rolling | Second cold rolling | Average crystal grain size (mm) | Texture | | Magnetic properties | | | | | Remarks |
|---|---|---|---|---|---|---|---|---|---|---|---|
| | Rolling temperature (°C) | Rolling temperature (°C) | | Φ (°) at which ODF is maximum | ODF at cube | Bso(T) | Reference value (T) of B₅₀ | W_{10/400} (W/kg) | Reference Value (W/kg) of W_{10/400} | Measurement method | |
| 26 | 220 | 130 | 0.14 | 0 | 6.4 | 1.71 | 1.67 | 7.1 | 9.1 | Epstein | Invention Example |
| 27 | 220 | 130 | 0.12 | 0 | 6.5 | 1.72 | 1.67 | 6.9 | 9.1 | Epstein | Invention Example |
| 28 | 220 | 130 | 0.12 | 0 | 6.6 | 1.72 | 1.67 | 6.8 | 9.1 | Epstein | Invention Example |
| 29 | 220 | 130 | 0.11 | 0 | 6.3 | 1.70 | 1.67 | 7.1 | 9.1 | Epstein | Invention Example |
| 30 | 220 | 130 | 0.15 | 0 | 6.6 | 1.72 | 1.67 | 6.8 | 9.1 | Epstein | Invention Example |
| 31 | 220 | 110 | 0.14 | 0 | 6.9 | 1.69 | 1.64 | 6.8 | 9.1 | Epstein | Invention Example |
| 32 | 220 | 110 | 0.12 | 0 | 6.8 | 1.68 | 1.64 | 6.9 | 9.1 | Epstein | Invention Example |
| 33 | 220 | 110 | 0.12 | 0 | 6.8 | 1.68 | 1.64 | 6.9 | 9.1 | Epstein | Invention Example |
| 34 | 220 | 110 | 0.14 | 0 | 6.9 | 1.68 | 1.64 | 6.8 | 9.1 | Epstein | Invention Example |
| 35 | 220 | 110 | 0.15 | 0 | 6.9 | 1.68 | 1.64 | 6.7 | 9.1 | Epstein | Invention Example |
| 36 | 220 | 110 | 0.12 | 0 | 7.0 | 1.69 | 1.64 | 6.9 | 9.1 | Epstein | Invention Example |
| 37 | 220 | 110 | 0.12 | 0 | 7.0 | 1.69 | 1.64 | 6.8 | 9.1 | Epstein | Invention Example |
| 38 | 220 | 110 | 0.12 | 0 | 7.1 | 1.69 | 1.64 | 6.8 | 9.1 | Epstein | Invention Example |
| 39 | 220 | 110 | 0.12 | 0 | 6.9 | 1.69 | 1.64 | 6.8 | 9.1 | Epstein | Invention Example |
| 40 | 220 | 110 | 0.12 | 0 | 6.9 | 1.69 | 1.64 | 6.7 | 9.1 | Epstein | Invention Example |
| 41 | 220 | 110 | 0.12 | 0 | 7.1 | 1.70 | 1.64 | 6.7 | 9.1 | Epstein | Invention Example |
| 42 | 210 | 110 | 0.11 | 0 | 6.5 | 1.68 | 1.63 | 6.9 | 9.1 | Epstein | Invention Example |
| 43 | 210 | 110 | 0.10 | 0 | 6.4 | 1.68 | 1.63 | 6.9 | 9.1 | Epstein | Invention Example |
| 44 | 210 | 110 | 0.10 | 0 | 6.4 | 1.68 | 1.63 | 6.9 | 9.1 | Epstein | Invention Example |
| 45 | 210 | 110 | 0.10 | 0 | 6.5 | 1.68 | 1.63 | 6.9 | 9.1 | Epstein | Invention Example |
| 46 | 210 | 110 | 0.10 | 0 | 6.5 | 1.68 | 1.63 | 6.9 | 9.1 | Epstein | Invention Example |
| 47 | 210 | 110 | 0.10 | 0 | 6.5 | 1.68 | 1.63 | 6.9 | 9.1 | Epstein | Invention Example |
| 48 | 210 | 110 | 0.11 | 0 | 6.5 | 1.68 | 1.63 | 6.9 | 9.1 | Epstein | Invention Example |
| 49 | 130 | 80 | 0.16 | 0 | 5.8 | 1.68 | 1.64 | 8.3 | 10.8 | Epstein | Invention Example |
| 50 | 220 | 30 | 0.16 | 0 | 5.7 | 1.68 | 1.64 | 8.5 | 10.8 | Epstein | Invention Example |
| 51 | 220 | 180 | 0.16 | 0 | 5.7 | 1.68 | 1.64 | 8.5 | 10.8 | Epstein | Invention Example |

**Table 5-3**

| Steel sheet No. | First cold rolling | Second cold rolling | Average crystal grain size (mm) | Texture | | Magnetic properties | | | | | Remarks |
|---|---|---|---|---|---|---|---|---|---|---|---|
| | Rolling temperature (°C) | Rolling temperature (°C) | | Φ (°) at which ODF is maximum | ODF at cube | B₅₀(T) | Reference value (T) of B₅₀ | W_{10/400} (W/kg) | Reference Value (W/kg) of W_{10/400} | Measurement method | |
| 52 | 240 | 130 | 0.11 | 0 | 3.6 | 1.61 | 1.64 | 9.9 | 9.1 | Epstein | Comparative Example |
| 53 | 240 | 130 | 0.11 | 0 | 5.4 | 1.65 | 1.64 | 7.1 | 9.1 | Epstein | Invention Example |
| 54 | 240 | 130 | 0.11 | 0 | 5.5 | 1.65 | 1.64 | 7.0 | 9.1 | Epstein | Invention Example |
| 55 | 240 | 130 | 0.11 | 0 | 3.8 | 1.62 | 1.64 | 9.4 | 9.1 | Epstein | Comparative Example |
| 56 | 320 | 130 | 0.11 | 0 | 5.2 | 1.65 | 1.64 | 7.2 | 9.1 | Epstein | Invention Example |

### Industrial Applicability

The present invention can produce a non-oriented electrical steel sheet that has high magnetic flux density and low high-frequency iron loss, and can be applicable to, for example, an electrical device that is required to have a compact, high-rotation-speed motor.

## Claims

1. A non-oriented electrical steel sheet with an ingredient composition comprising, in mass%,
C: 0.0050% or less,
Si: 1.0 to 4.5%,
Mn: 2.00% or less,
P: 0.10% or less, and
S: 0.0040% or less,
with the rest being Fe and unavoidable impurities,
**characterized in that**
the thickness of the steel sheet is 0.20 mm or less, and
in terms of an orientation distribution function (ODF) of a central layer in a thickness direction of the steel sheet represented in an Euler space representing a crystal texture in which 0 ≤ φ 1 ≤ 90°, φ2 = 45°, and 0 ≤ Φ ≤ 90° , a maximum intensity is obtained within Φ = 0°, and an intensity of an orientation in which φ1 = 45°, φ2 = 45°, and Φ = 0° is 4.0 or more.

2. The non-oriented electrical steel sheet according to claim 1, wherein
an average crystal grain size in the rolling direction is 0.20 mm or less.

3. The non-oriented electrical steel sheet according to claim 1 or 2, wherein
the non-oriented electrical steel sheet further comprises, in addition to the ingredient composition, at least one element selected from the group consisting of, in mass%, Al: 0.0001 to 2.0%, N: 0.003% or less, Ca: 0.0005 to 0.010%, Cr: 0.001 to 0.05%, Cu: 0.001 to 0.5%, Sb: 0.001 to 0.05%, Sn: 0.001 to 0.05%, and B: 0.0001 to 0.005%.

4. The non-oriented electrical steel sheet according to any one of claims 1 to 3, wherein
a Si content is in a range of 1.0 to 7.5%.

5. The non-oriented electrical steel sheet according to any one of claims 1 to 4, wherein
the non-oriented electrical steel sheet further comprises, in addition to the ingredient composition, at least one element selected from the group consisting of, in mass%, Zn, Co, Mo, Ni, and W by 0.001 to 0.1% in total.

6. The non-oriented electrical steel sheet according to any one of claims 1 to 5, wherein
the non-oriented electrical steel sheet further comprises, in addition to the ingredient composition, at least one element selected from the group consisting of, in mass%, O, Mg, REM, Ti, Nb, V, Ta, Ge, Pb, As, and Ga by 0.001 to 0.05 % in total.

7. A method for producing a non-oriented electrical steel sheet, comprising:
performing hot rolling a steel material having an ingredient composition including, in mass%,
C: 0.0050% or less,
Si: 1.0 to 4.5%,
Mn: 2.00% or less,
P: 0.10% or less, and
S: 0.0040% or less, and optionally, including at least one element selected from the group consisting of Al: 0.0001 to 2.0%, N: 0.003% or less, Ca: 0.0005 to 0.010%, Cr: 0.001 to 0.05%, Cu: 0.001 to 0.5%, Sb: 0.001 to 0.05%, Sn: 0.001 to 0.05%, and B: 0.0001 to 0.005%, with the rest being Fe and unavoidable impurities;
performing two cold rollings with intermediate annealing between each cold rolling; and
performing final annealing,
**characterized in that**
the rolling reduction of the first cold rolling is 92% or more, and the rolling reduction of the second cold rolling is between 30% and 80%.
performing hot-band annealing between the hot rolling and first cold rolling.

8. The method for producing a non-oriented electrical steel sheet according to claim 7, wherein
the method further comprises performing hot-band annealing between the hot rolling and the first cold rolling.

9. The method for producing the non-oriented electrical steel sheet according to claim 7 or 8, wherein
the rolling temperature of the first cold rolling is 150 to 300°C, and the rolling temperature of the second cold rolling is 50 to 150°C.

10. The method for producing the non-oriented electrical steel sheet according to any one of claims 7 to 9, wherein
the method further comprises performing siliconizing treatment after the cold rolling to allow the steel sheet to contain a maximum of 7.5% Si on average throughout the thickness of the steel sheet.

11. A method for producing a motor core, **characterized in that**
the method comprises producing a motor core composed of a rotor core and a stator core from the non-oriented electrical steel sheet produced with the method according to any one of claims 7 to 9 and
subjecting the stator core to stress-relief annealing.
